# FASCICULE DE BREVET EUROPEEN

(11) **EP 1 712 382 B1**
(45) Date de publication et mention de la délivrance du brevet: **05.12.2007**
(21) Numéro de dépôt: 06300332.1
(22) Date de dépôt: 05.04.2006
(51) Int. Cl.: B60H 1/00

(54) **Dispositif de ventilation d'un véhicule automobile comportant des moyens d'atténuation de bruit**
Geräuschgedämpfte Belüftungseinrichtung für ein Kraftfahrzeug
Ventilation device for a vehicle including noise reduction means

(30) Priorité: 11.04.2005 FR 0503553
(43) Date de publication de la demande: 18.10.2006
(73) Titulaire: RENAULT S.A.S., 92100 Boulogne Billancourt (FR)
(72) Inventeur: Batuecas Mohedano, Oscar, 47002, Vallodolid (ES); De Pablos Gallego, M. Juan Carlos, 47011, Valladolid (ES); Thomy, Emmanuel, 91220, Le Plessis Pate (FR)

(56) Documents cités:
- EP-A- 1 527 915
- DE-A1- 19 722 866
- DE-U- 6 907 058
- FR-A- 2 761 305

## Description

La présente invention concerne un dispositif de ventilation d'un véhicule automobile, comportant des moyens d'atténuation de bruit.

On sait que les dispositifs de ventilation des véhicules automobiles comprennent un groupe de ventilation ou de climatisation adapté pour envoyer de l'air rafraîchi ou réchauffé dans des conduits de ventilation distincts dont les sorties débouchent dans l'habitacle du véhicule.

Ces dispositifs engendrent des nuisances acoustiques qui sont d'autant plus perceptibles par les automobilistes en raison des progrès réalisés ces dernières années en matière de silence de fonctionnement des moteurs à combustion interne.

Ces nuisances sonores sont générées par le ventilateur du groupe de ventilation-climatisation et sont transmises vers l'habitacle par les conduits de ventilation précités et par les turbulences engendrées dans l'air s'écoulant dans ces conduits.

Différentes solutions ont été proposées pour tenter de réduire les nuisances acoustiques engendrées par les dispositifs de ventilation.

L'une de ces solutions a été décrite dans FR0406645 déposé le 18 juin 2004 au nom de la Demanderesse et publié sous le numéro FR 2 871 872. Elle consiste à réaliser, dans chaque conduit de ventilation, une cavité de section plus importante que celle du reste du conduit.

Une autre solution a été décrite dans FR 2 712 851. Elle consiste à créer, dans le conduit de ventilation, des cavités de section plus importantes que le reste du conduit, ces cavités étant remplies de mousse.

Le document EP1527915 divulgue un dispositif de ventilation dont des conduits de ventilation sont reliés entre eux par un conduit de liaison, avec équilibre des pressions dans les conduits. Le conduit de liaison s'étend dans une direction perpendiculaire à la paroi des conduits qu'il raccorde.

Cependant, ces solutions connues ne sont pas entièrement satisfaisantes.

Le but de la présente invention est de créer un dispositif de ventilation doté de moyens d'atténuation de bruit qui soit à la fois efficace et de mise en oeuvre économique.

Suivant l'invention, le dispositif de ventilation d'un véhicule automobile comprend un groupe de ventilation adapté pour envoyer de l'air dans au moins deux conduits de ventilation distincts, dont les sorties débouchent dans l'habitacle du véhicule. Les conduits de ventilation sont coudés de façon à comporter chacun un tronçon aval et un tronçon amont raccordés par un tronçon coudé. Les tronçons coudés sont reliés entre eux par un conduit de liaison s'étendant dans une direction sensiblement perpendiculaire au sens de l'écoulement de l'air dans les conduits de ventilation. Le conduit de liaison est raccordé à chacun des tronçons coudés dans une zone du tronçon coudé qui est orientée vers l'aval.

Du fait de sa disposition sensiblement perpendiculaire au sens de l'écoulement de l'air, la présence du conduit de liaison ne perturbe pas l'écoulement de l'air dans les conduits de ventilation. Par disposition sensiblement perpendiculaire, on entend toute orientation sensiblement transversale à l'écoulement de l'air.

La présence du conduit de liaison perturbe d'autant moins l'écoulement de l'air dans les conduits de ventilation son embouchure au raccordement avec chacun des tronçons coudés dans une zone du tronçon coudé qui est orientée vers le tronçon aval, c'est-à-dire dans une zone qui ne fait pas face au flux d'air amont. Dit autrement, le conduit de liaison est raccordé à chacun des tronçons coudés dans une zone du tronçon coudé qui est une zone morte de l'écoulement. Ainsi, la présence du conduit de liaison permet de casser les ondes acoustiques et ne crée pas de perte de charge, ni de turbulence susceptible de créer des bruits d'écoulement d'air.

Du point de vue acoustique, l'onde acoustique propagée dans chacun des conduits de ventilation rencontre, au droit du conduit de liaison, un changement de section brusque qui permet de créer une rupture de l'impédance qui perturbe les ondes acoustiques issues du groupe de ventilation, en atténuant le bruit, notamment dans les fréquences supérieures à 1000 Hz.

De préférence, les extrémités opposées dudit conduit de liaison débouchent, dans les conduits de ventilation, dans une zone comprise entre l'entrée et la sortie d'air de ceux-ci.

Dans une version particulièrement économique et efficace de l'invention, ledit conduit de liaison est moulé d'une seule pièce en matière plastique avec un tronçon au moins de chacun des conduits de ventilation.

De préférence, les conduits de ventilations sont disposés sensiblement au centre d'une planche de bord du véhicule.

Dans un mode de réalisation particulier, le dispositif de ventilation comprend deux conduits.

D'autres particularités et avantages de l'invention apparaîtront encore dans la description ci-après.

Sur les dessins annexés, donnés à titre d'exemples non limitatifs :
- la figure 1 est une vue en perspective d'un dispositif de ventilation de montage classique, montrant le dessus de deux conduits de ventilation séparés,
- la figure 2 est une vue en perspective d'un dispositif de ventilation selon l'invention, montrant deux conduits de ventilation raccordés entre eux par un conduit de liaison,
- la figure 3 est un diagramme montrant l'évolution du bruit en fonction de la fréquence.

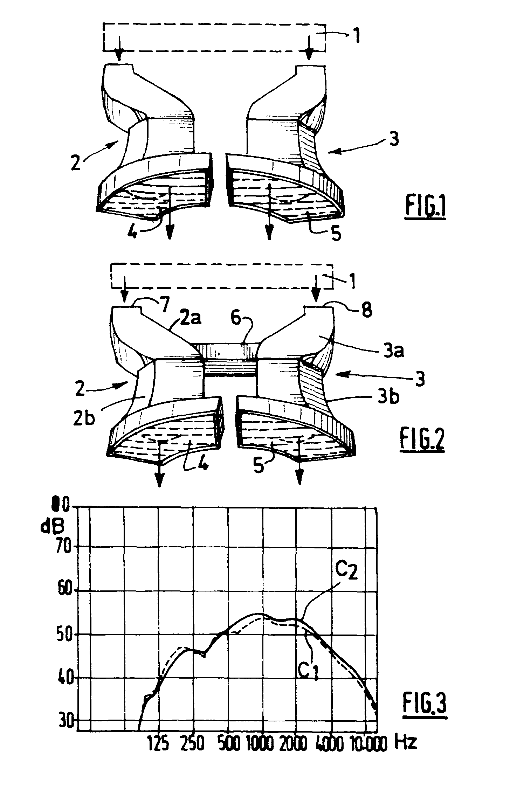

Dans la réalisation représentée sur la figure 1, le dispositif de ventilation d'un véhicule automobile comprend un groupe de ventilation 1 adapté pour envoyer de l'air dans deux conduits de ventilation distincts 2, 3 dont les sorties 4, 5 débouchent dans l'habitacle du véhicule. Le montage des conduits de ce dispositif est classique. Ces sorties d'air 4, 5 comportent, de façon connue, des moyens de réglage du débit et de la répartition de l'air.

Conformément à l'invention, les deux conduits de ventilation 2, 3 sont reliés entre eux, comme indiqué sur la figure 2, par un conduit de liaison 6 s'étendant dans une direction sensiblement perpendiculaire au sens de l'écoulement de l'air (voir les flèches représentées sur les figures 1 et 2) dans les deux conduits de ventilation 2, 3.

Dans l'exemple illustré par la figure 2, les extrémités opposées du conduit de liaison 6 débouchent, dans les deux conduits de ventilation 2, 3, dans une zone comprise entre l'entrée 7, 8 et la sortie d'air 4, 5 de ceux-ci.

Cette zone peut être par exemple située à peu près à mi-distance de la longueur totale des conduits 2, 3.

Dans une réalisation préférée de l'invention, le conduit de liaison 6 est moulé d'une seule pièce en matière plastique avec un tronçon 2a, 3a au moins de chacun des deux conduits de ventilation 2, 3.

Dans la version représentée, le conduit de liaison 6 est moulé d'une seule pièce en matière plastique avec un tronçon 2a, 3a de chacun des deux conduits de ventilation 2, 3 qui porte, à l'une de ses extrémités, l'entrée d'air 7, 8, et dont l'autre extrémité est raccordée à un tronçon 2b, 3b des conduits de ventilation 2, 3 qui comporte la sortie de l'air 4, 5 vers l'habitacle.

Les tronçons 2a et 2b, tout comme les tronçons 3a et 3b sont mutuellement inclinés. Les conduits 2 et 3 sont donc coudés de façon à comporter chacun un tronçon amont 2a, 3a et un tronçon aval 2b, 3b raccordés par un tronçon coudé. Dans le mode de réalisation représenté à la figure 2, le tronçon coudé est une partie aval de tronçon amont 2a, 3a. Selon l'invention, le conduit de liaison 6 relie les tronçons coudés. Le conduit de liaison 6 est raccordé à chacun des tronçons coudés dans une zone du tronçon coudé qui est orientée vers l'aval, c'est-à-dire ici en regard du tronçon aval et de la sortie 4, 5 de chacun des conduits. Le conduit de liaison 6 est raccordé à chacun des tronçons coudés dans une zone de tronçon coudé qui est en regard d'une zone de tronçon coudé orientée vers l'entrée d'air 7, 8 de chacun des conduits, ici en regard desdites entrées d'air.

L'air provenant de chaque tronçon amont ne vient avantageusement pas taper dans la paroi de la zone du tronçon coudé autour de l'embouchure du conduit de liaison 6.

Le conduit de liaison est ainsi raccordé à chacun des tronçons coudés dans une zone du tronçon coudé qui est une zone morte de l'écoulement, c'est-à-dire dans une zone ou la vitesse de l'écoulement est moins importante que dans les autres zones du coude dans lesquelles la vitesse de l'écoulement est la plus grande.

Dans l'exemple de la figure 2, chacun des deux tronçons 2a, 3a du conduit de ventilation qui sont reliés au conduit de liaison 6, ici le tronçon coudé, s'étend dans une direction inclinée vers l'extérieur par rapport à la direction de chacun des deux tronçons 2b, 3b du conduit de ventilation comportant la sortie d'air 4, 5 vers l'habitacle.

La section et la longueur du conduit de liaison 6 ne sont pas critiques. L'essentiel est que ce conduit 6 forme un certain volume, dans lequel débouche chacun des deux conduits de ventilation. La valeur optimale de ce volume peut être établie expérimentalement.

La figure 3 montre l'évolution du bruit en dB, mesuré au niveau de l'oreille d'une personne située dans le véhicule, en fonction de la fréquence en Hz, obtenu dans le cas des dispositifs représentés sur les figures 1 et 2.

La courbe Ci, représentée en pointillés sur la figure 3, illustre le cas du dispositif de la figure 1, tandis que la courbe C₂ en trait continu se rapporte au dispositif selon l'invention.

On voit que, pour des fréquences supérieures à 1000 Hz, l'atténuation du bruit est, dans le cas de l'invention, de l'ordre de 1 à 2 dB par rapport au cas du dispositif de la figure 1.

Ce résultat peut s'expliquer par le fait que les ondes acoustiques émises par le groupe de ventilation-climatisation 1 rencontrent, dans leur trajet dans les conduits 2, 3, une brusque variation de section au niveau du conduit de liaison 6, qui atténue l'effet de ces ondes, c'est-à-dire le bruit engendré par celles-ci.

Il n'y a avantageusement pas de perte de charge, c'est-à-dire pas de perte d'efficacité de l'écoulement car la brusque variation de section est dans une zone morte du tronçon coudé.

Les conduits représentés dans l'exemple sont ceux d'aérateurs centraux montés au centre d'une planche de bord d'un véhicule.

Le dispositif de ventilation du mode de réalisation représenté comprend deux conduits. Dans une variante de réalisation, le dispositif peut comprendre trois conduits reliés entre eux.

## Revendications

1. Dispositif de ventilation d'un véhicule automobile comprenant un groupe de ventilation (1) adapté pour envoyer de l'air dans au moins deux conduits de ventilation distincts (2, 3) dont les sorties (4, 5) débouchent dans l'habitacle du véhicule, **caractérisé en ce que** les conduits de ventilation (2, 3) sont coudés de façon à comporter chacun un tronçon aval (2b, 3b) et un tronçon amont (2a, 3a) raccordés par un tronçon coudé, les tronçons coudés étant reliés entre eux par un conduit de liaison (6) s'étendant dans une direction sensiblement perpendiculaire au sens de l'écoulement de l'air dans les conduits de ventilation (2, 3), le conduit de liaison (6) étant raccordé à chacun des tronçons coudés dans une zone du tronçon coudé qui est orientée vers l'aval.

2. Dispositif de ventilation selon la revendication 1, **caractérisé en ce que** les extrémités opposées dudit conduit de liaison (6) débouchent, dans les conduits de ventilation (2, 3), dans une zone comprise entre l'entrée (7, 8) et la sortie d'air (4, 5) de ceux-ci.

3. Dispositif de ventilation selon l'une des revendications 1 ou 2, **caractérisé en ce que** ledit conduit de liaison (6) est moulé d'une seule pièce en matière plastique avec un tronçon (2a, 3a) au moins de chacun des conduits de ventilation (2, 3).

4. Dispositif de ventilation selon la revendication 3, **caractérisé en ce que** ledit conduit de liaison (6) est moulé d'une seule pièce en matière plastique avec un tronçon (2a, 3a) de chacun des conduits de ventilation (2, 3) qui porte, à l'une de ses extrémités, l'entrée d'air (7, 8) et dont l'autre extrémité est raccordée un tronçon (2b, 3b) des conduits de ventilation qui comporte la sortie d'air (4, 5) vers l'habitacle.

5. Dispositif de ventilation selon l'une quelconque des revendications précédentes, **caractérisé en ce que** chacun des deux tronçons (2a, 3a) du conduit de ventilation reliés au conduit de liaison (6) s'étend dans une direction inclinée vers l'extérieur par rapport à la direction de chacun des deux tronçons (2b, 3b) du conduit de ventilation comportant la sortie d'air (4, 5) vers l'habitacle.

6. Dispositif de ventilation selon l'une quelconque des revendications précédentes, **caractérisé en ce que** les conduits de ventilations (2, 3) sont aptes à être disposés sensiblement au centre d'une planche de bord du véhicule.

7. Dispositif de ventilation selon l'une quelconque des revendications précédentes, **caractérisé en ce qu**'il comprend deux conduits de ventilation (2, 3).

## Claims

1. Ventilation device for a motor vehicle comprising a ventilation unit (1) arranged to send air into at least two distinct ventilation ducts (2, 3) of which the outlets (4, 5) lead into the passenger compartment of the vehicle, **characterized in that** the ventilation ducts (2, 3) are angled so that each includes a downstream portion (2b, 3b) and an upstream portion (2a, 3a) connected by an angled portion, the angled portions being connected to each other by a connecting duct (6) lying in a direction generally perpendicular to the direction of flow of the air in the ventilation ducts (2, 3), the connecting duct (6) being connected to each of the angled portions in a zone of the angled portion which is oriented downstream.

2. Ventilation device according to Claim 1, **characterized in that** the opposite ends of the said connecting duct (6) lead into the ventilation ducts (2, 3), in a zone between the air inlet (7, 8) and the air outlet (4, 5).

3. Ventilation device according to one of Claims 1 or 2, **characterized in that** the said connecting duct (6) is moulded in a single piece of plastic with one portion (2a, 3a) at least of each of the ventilation ducts (2, 3).

4. Ventilation device according to Claim 3, **characterized in that** the said connecting duct (6) is moulded in a single piece of plastic with one portion (2a, 3a) of each of the ventilation ducts (2, 3) which carries, at one of its ends, the air inlet (7, 8) and of which the other end is connected to a portion (2b, 3b) of the ventilation ducts which includes the air outlet (4, 5) to the passenger compartment.

5. Ventilation device according to any one of the preceding claims, **characterized in that** each of the two portions (2a, 3a) of the ventilation duct connected to the connecting duct (6) lies in a direction inclined towards the outside in relation to the direction of each of the two portions (2b, 3b) of the ventilation duct which includes the air outlet (4, 5) to the passenger compartment.

6. Ventilation device according to any one of the preceding claims, **characterized in that** the ventilation ducts (2, 3) are able to be disposed generally in the centre of a dashboard of the vehicle.

7. Ventilation device according to any one of the preceding claims, **characterized in that** it comprises two ventilation ducts (2, 3).

## Patentansprüche

1. Belüftungsvorrichtung eines Kraftfahrzeugs, die eine Belüftungseinheit (1) aufweist, die geeignet ist, um Luft in mindestens zwei getrennte Belüftungskanäle (2, 3) zu schicken, deren Ausgänge (4, 5) in den Innenraum des Fahrzeugs münden, **dadurch gekennzeichnet, dass** die Belüftungskanäle (2, 3) so gebogen sind, dass sie je einen stromabwärts liegenden Abschnitt (2b, 3b) und einen stromaufwärts liegenden Abschnitt (2a, 3a) aufweisen, die von einem gebogenen Abschnitt verbunden werden, wobei die gebogenen Abschnitte miteinander über einen Verbindungskanal (6) verbunden sind, der sich in einer Richtung im Wesentlichen lotrecht zur Strömungsrichtung der Luft in den Belüftungskanälen (2, 3) erstreckt, wobei der Verbindungskanal (6) mit jedem der gebogenen Abschnitte in einer Zone des gebogenen Abschnitts verbunden ist, die stromabwärts gerichtet ist.

2. Belüftungsvorrichtung nach Anspruch 1, **dadurch gekennzeichnet, dass** die entgegengesetzten Enden des Verbindungskanals (6) in die Belüftungskanäle (2, 3) in einer Zone münden, die zwischen deren Lufteingang (7, 8) und Luftausgang (4, 5) liegt.

3. Belüftungsvorrichtung nach einem der Ansprüche 1 oder 2, **dadurch gekennzeichnet, dass** der Verbindungskanal (6) aus einem Stück aus Kunststoff mit mindestens einem Abschnitt (2a, 3a) jedes der Belüftungskanäle (2, 3) geformt wird.

4. Belüftungsvorrichtung nach Anspruch 3, **dadurch gekennzeichnet, dass** der Verbindungskanal (6) aus einem Stück aus Kunststoff mit einem Abschnitt (2a, 3a) jedes der Belüftungskanäle (2, 3) geformt wird, der an einem seiner Enden den Lufteingang (7, 8) trägt und dessen anderes Ende mit einem Abschnitt (2b, 3b) der Belüftungskanäle verbunden ist, der den Luftausgang (4, 5) zum Innenraum aufweist.

5. Belüftungsvorrichtung nach einem der vorhergehenden Ansprüche, **dadurch gekennzeichnet, dass** jeder der zwei Abschnitte (2a, 3a) des Belüftungskanals, die mit dem Verbindungskanal (6) verbunden ist, sich in einer nach außen geneigten Richtung bezüglich der Richtung jedes der zwei Abschnitte (2b, 3b) des Belüftungskanals erstreckt, der den Luftausgang (4, 5) zum Innenraum aufweist.

6. Belüftungsvorrichtung nach einem der vorhergehenden Ansprüche, **dadurch gekennzeichnet, dass** die Belüftungskanäle (2, 3) im Wesentlichen in der Mitte eines Armaturenbretts des Fahrzeugs angeordnet sein können.

7. Belüftungsvorrichtung nach einem der vorhergehenden Ansprüche, **dadurch gekennzeichnet, dass** sie zwei Belüftungskanäle (2, 3) aufweist.
